# EUROPÄISCHE PATENTSCHRIFT

(11) **EP 2 714 554 B1**
(45) Veröffentlichungstag und Bekanntmachung des Hinweises auf die Patenterteilung: **13.07.2016**
(21) Anmeldenummer: 12745391.8
(22) Anmeldetag: 29.05.2012
(51) Int. Cl.: B65G 11/16

(54) **VERSCHLEISSSCHUTZ**
WEAR PROTECTION DEVICE
DISPOSITIF DE PROTECTION CONTRE L'USURE

(30) Priorität: 01.06.2011 DE 202011101639 U
(43) Veröffentlichungstag der Anmeldung: 09.04.2014
(73) Patentinhaber: FCT Ingenieurkeramik GmbH, 96528 Rauenstein (DE)
(72) Erfinder: BERROTH, Karl, 96528 Frankenblick (DE); VORSATZ, Thomas, 98529 Suhl (DE)
(74) Vertreter: Weihrauch, Frank
(86) Internationale Anmeldenummer: PCT/DE2012/000555
(87) Internationale Veröffentlichungsnummer: WO 2012/163328

(56) Entgegenhaltungen:
- EP-A1- 0 239 660
- WO-A1-2006/132582
- DE-A1- 19 859 733
- DE-U1- 9 320 943
- GB-A- 2 128 172
- GB-A- 2 194 222
- US-A- 3 607 606

## Beschreibung

Die Erfindung betrifft einen Verschleißschutz nach dem Oberbegriff des Anspruchs 1 zur Anwendung auf Oberflächen, welche einer erhöhten Belastung ausgesetzt sind, wie er aus der GB 2 194 222 A bekannt ist.

Verschleißschutzvorrichtungen, insbesondere auf Basis keramischer Elemente oder Werkstoffe sind prinzipiell aus dem Stand der Technik bekannt.
Derartige Verschleißschutzvorrichtungen kommen vorzugsweise in Anwendungen zum Einsatz, bei denen Bauteile bei dem Transport von stark abrasiv wirkenden Stoffen oder Stoffgemischen gegen Beschädigungen oder Abnutzung geschützt werden sollen.
So können beispielsweise Prallwände oder Rohre von Fördereinrichtungen, sowie Rutschflächen für Schüttgut mit einer entsprechend darauf angeordneten Verschleißschutzvorrichtung versehen sein.

Die Wahl der geeigneten Verschleißschutzvorrichtung richtet sich neben der Art der Beanspruchung nach Art, Form oder Ausbildung des zu schützenden Bauteils, beziehungsweise des Untergrunds.

Bei ebenen Bauteilen oder Flächen kommen vorzugsweise großflächige Verschleißplatten zum Einsatz, welche auf dem planen Untergrund verlegt werden.

Hierbei wird zumeist darauf geachtet, dass eine Fugenbildung zwischen einzelnen Platten und somit das Einbringen von Schwachstellen in den Verschleißschutz soweit wie möglich verhindert wird.

Darüber hinaus sind zur Befestigung der Verschleißschutzvorrichtungen in aller Regel geeignete Befestigungsmittel notwendig, welche je nach Art der Anbringung ebenfalls dem Verschleiß ausgesetzt sind.

Um das oben aufgeführte Einbringen von Schwachstellen in die Verschleißschutzvorrichtung zu vermeiden sind aus dem Stand der Technik Vorrichtungen mit verschiedenen Lösungen bekannt.

So wird beispielsweise in Druckschrift DD 294 913 A5 ein als Gleit- und Schleißeinlage für Fördereinrichtungen gekenn¬zeichneter Verschleißschutz beschrieben.
Der beschriebene Verschleißschutz weist eine Mehrzahl aneinander gereihter Elemente aus Blech, Keramik oder Glas auf, deren gegenüberliegende Seitenflächen gegenüber der Ober- oder Unterseite der Elemente geneigt ausgebildet sind und einen trapezförmigen Querschnitt besitzen.
Darüber hinaus weist ein Teil der Elemente Gewindezapfen auf, mittels derer die Elemente an dem zu schützenden Grundkörper befestigt werden.
Die Elemente, die keine Gewindezapfen aufweisen, werden zwischen jeweils zwei Elementen mit Gewindezapfen schwalbenschwanzförmig verklemmt. Durch die erfindungsgemäße Ausbildung und Anordnung der Verschleißschutzelemente soll erreicht werden, dass zum einen der notwendige Montageaufwand verringert wird und dass zum anderen nicht die sonst üblichen, durchgängigen Fugen zwischen den einzelnen Elementen entstehen.

Ein weiterer Verschleißschutz für Wände, welche erhöhtem Verschleiß ausgesetzt sind, wird in Druckschrift DE 698 22 00 T2 offenbart.
Der hierin beschriebene Verschleißschutz liegt in Form eines Verschleißfutters vor, welches aus einer Anzahl nebeneinander angeordneter Verschleißfutterelemente besteht.
Die Verschleißfutterelemente weisen wahlweise ein verschleißbeständiges Material, zum Beispiel Keramik auf.
Die Verschleißfutterelemente sind weiterhin über V-förmige Scheiben miteinander verbunden und weisen an zwei gegenüberliegenden Seiten Flansche auf, welche es ermöglichen, dass sich die Elemente einander arretieren.

Die offenbarte Lösung hat jedoch den Nachteil, dass hierbei die einzelnen Verschleißfutterelemente an den beiden anderen sich gegenüberliegenden Seiten, an denen die V-förmigen Scheiben aufgenommen werden, keine Flansche besitzen sondern sich an diesen Stellen lediglich stumpf anstoßen und damit durchgängige Fugen einbringen. Es ergibt sich somit eine nachteilige Schwachstellenbildung.

Für ebene Untergründe verwendete Verschleißschutzvorrichtungen haben in aller Regel den weiteren Nachteil, dass sie im Wesentlichen als starrer Elementeverbund vorliegen und somit nicht für die Verwendung auf räumlich geformten, unebenen oder flexiblen Bauteilen beziehungsweise Untergründen anwendbar sind.

Um für derartige Einsatzzwecke einen Verschleißschutz bereitzustellen, greift man bevorzugt auf sogenannte Mosaikmatten zurück, welche aus einer Vielzahl einzelner Elemente bestehen, die bevorzugt auf einer Matte aus einem elastischen Material angeordnet werden.

Eine derartige Verschleißschutzmatte ist beispielsweise der Druckschrift DE 43 44 600 A1 zu entnehmen.
Hierbei wird eine Mehrzahl quadratischer, insbesondere keramischer Platten auf einer Matte angeordnet. Zwischen der Matte und den quadratischen Platten ist weiterhin eine Schicht aus Gummi oder einem elastischen Material vorgesehen, durch welche Stoßbelastungen abgefangen werden sollen.
Die Anordnung der quadratischen Platten erfolgt erfindungsgemäß derart, dass die Platten zueinander jeweils um eine halbe Kantenlänge versetzt positioniert werden.
Dadurch wird erzielt, dass sich durchgehende Fugen nur in einer Richtung der Matte ausbilden, welche bei deren Verwendung vorzugsweise quer zur Bewegungsrichtung des zu transportierenden Stoffes gerichtet ist.

Weiterhin sind aus dem Stand der Technik Verschleißschutzvorrichtungen zum Einbringen in sogenannte Förderschläuche bekannt.

So offenbart beispielsweise DE 10 2009 016 951 A1 einen För¬derschlauch zum Transport abrasiv wirkender Medien.
Der Förderschlauch weist unter anderem eine Innenlage aus einzelnen keramischen Verschleißschutzringen auf, welche mit einer Gummilage zusammenvulkanisiert sind.

Den aus dem Stand der Technik bekannten, an räumlich geformten beziehungsweise flexiblen Untergründen oder Bauteilen anwendbaren Verschleißschutzvorrichtungen ist der Nachteil gemein, dass diese meist jeweils nur eine einschichtige Lage und damit zum Untergrund durchgehende Stoßfugen aufweisen. Auf ein Element einwirkende Stoßbelastungen können nicht wirksam auf andere Elemente übertragen werden.

Um insbesondere dem Problem der Fugenbildung zu begegnen, ist aus der Druckschrift GB 2 194 222 A ein Lösungsansatz bekannt, bei welchem Kachelelemente mit Flankenabschnitten versehen sind, in deren Bereichen sich aneinandergrenzende Kachelelemente überlappen.
Der Nachteil der hier aufgezeigten Kachelelemente besteht jedoch insbesondere in der Dimensionierung der Flankenabschnitte, durch welche lediglich eine geringfügige Überlappung bereitstellbar ist und deren Dicke prinzipbedingt nur der halben Dicke des gesamten Kachelelements entspricht. Durch diese Dimensionierung können die Flankenabschnitte somit, insbesondere bei Stoßbelastungen, leicht beschädigt werden, sodass die Fugenbereiche zwischen benachbarten Kachelelementen freigelegt und die Schutzwirkung durch die Kachelemente nicht aufrecht erhalten werden kann.

Es ist daher Aufgabe der Erfindung, einen Verschleißschutz bereitzustellen, welcher einfach herstellbar und universell einsetzbar ist, eine hohe Verschleißbeständigkeit sowie eine erhöhte Stoßfesfigkeit besitzt und auf gekrümmten sowie verformbaren Untergründen anwendbar ist.

Die Aufgabe wird durch die im Patentanspruch 1 aufgeführten Merkmale gelöst. Bevorzugte Weiterbildungen ergeben sich aus den Unteransprüchen.

Ein erfindungsgemäßer Verschleißschutz weist eine Mehrzahl Formelemente auf, wobei die Formelemente im Wesentlichen plattenförmig ausgebildet sind.

Die Formelemente weisen besonders vorteilhaft mindestens zwei, zueinander versetzt angeordnete Platten, nachfolgenden auch Ebenen genannt, auf, wobei die Platten durch einteilige Ausbildung der Formelemente stofflich miteinander verbunden sind, wobei der Bereich, in welchem die Platten der Formelemente stofflich miteinander verbunden sind, nachfolgend auch als Überschneidungsbereich bezeichnet wird.

Unter versetzter Anordnung der Ebenen eines Formelements wird in diesem Zusammenhang verstanden, dass die Ebenen sowohl horizontal, als auch vertikal zueinander versetzt angeordnet sind.

Mindestens zwei der erfindungsgemäß vorgesehenen Formelemente sind in einem Formelementeverbund in der Weise in einer Lagebeziehung zueinander festgelegt, dass eine erste Ebene des ersten Formelements eine zweite Ebene des zweiten Formelements abschnittsweise übergreift. In einem erfindungsgemäßen Formelementeverbund kann dabei ein erstes Formelement bis zu drei weitere Formelemente in deren zweiten Ebene abschnittsweise übergreifen. Entsprechendes gilt bei etwaigen weiteren Ebenen.

Der Bereich, in dem sich die jeweiligen Ebenen der, in einer Lagebeziehung zueinander stehenden Formelemente, übergreifen, wird nachfolgend auch als Übergreifungsbereich bezeichnet.

Ein sich zwischen den übergreifenden Ebenen der, in einer Lagebeziehung zueinander stehenden Formelemente, ausbildender Bereich wird im Weiteren auch als Fuge oder Fugenbereich bezeichnet.

Als besonderer Vorteil der Erfindung wird durch die Übergreifungen der Ebenen der Formelemente eine Lösung bereitgestellt, bei der innerhalb eines derartigen Formelementeverbundes praktisch zwei übereinander liegende und zueinander versetzte Gesamtflächen gebildet werden, welche es vorteilhaft ermöglichen, dass ein erfindungsgemäßer Formelementeverbund gänzlich ohne linienförmige Durchdringungen bereitgestellt wird.
Als Durchdringungen werden Öffnungen innerhalb eines Verschleißschutzes verstanden, durch welche ein abrasiv wirkendes Material oder Gemisch, durch den Verschleißschutz hindurch, ungehindert bis zu einer zu schützenden Oberfläche gelangen kann.
Hierdurch wird es ebenfalls wirkungsvoll verhindert, dass ein abrasiv wirkendes Material den Verschleißschutz unterspülen und diesen so von der zu schützenden Oberfläche lösen kann.

Als besonderer Vorteil erfolgt bereits durch die stoffliche Verbindung der mindestens zwei Ebenen in jedem Formelement eine zuverlässige Festlegung der Lagebeziehung der mindestens zwei gebildeten und zueinanderer versetzten Gesamtflächen zueinander, so dass sich die Gesamtebenen bei einwirkenden Quer- und/oder Schubspannungen nicht zueinander verschieben können und die Abwesenheit von linienförmigen Durchdringungen stets gesichert bleibt. Derartige Quer- und/oder Schubspannungen können somit ohne zusätzliche Maßnahmen und zudem besser aufgenommen werden, als dies bei den bekannten Verschleißschutzvorrichtungen der Fall ist.

Gegenüber den, aus dem Stand der Technik bekannten, großflächigen Verschleißschutzplatten führt die geometrische Ausbildung der Formelemente und die erfindungsgemäß vorgesehene Kleinsegmentierung des Formelementeverbundes besonders vorteilhaft dazu, dass bei eventuell auftretenden Spitzenbelastungsereignissen durch größere Förderteile, beispielsweise Gesteinsbrocken, der Formelementeverbund weniger anfällig für eine Zerstörung ist.
In einem solchen Fall werden die auftretenden Stoßbelastungen nicht nur, wie sonst üblich, durch ein einzelnes großes Verschleißelement, sondern durch die Vielzahl der Formelemente aufgenommen und wirkungsvoll abgebaut. Eine Rissentstehung ist bei der Kleinsegmentierung besser zu verhindern.

Als Verschleißschutz wird ein Schutz vor Verschleiß insbesondere durch abrasive, mechanische und thermische Belastung verstanden.

Eine besonders vorteilhafte Weiterbildung des Verschleißschutzes sieht vor, dass die Lagebeziehung der Formelemente zueinander durch ein Verbundmittel festgelegt wird.
Unter Verbundmittel wird hierbei jede Art und Weise der Herstellung einer Lagebeziehung der Formelemente zueinander verstanden.

In einer weiteren bevorzugten Variante der Erfindung erfolgt eine direkte Verbindung mindestens zweier Formelemente miteinander.
Als direkte Verbindung ist zu verstehen, dass eine Verbindung von, in einer Lagebeziehung zueinander stehenden, Formelementen in dem Übergreifungs- und/ oder Fugenbereich, oder in Abschnitten hiervon, hergestellt wird.
Dabei wird vorteilhafterweise die erste Ebene des ersten Formelements mit der zweiten Ebene des zweiten Formelements im Übergreifungsbereich stoffschlüssig verbunden. Alternativ oder kumulativ kann die stoffschlüssige Verbindung auch im Fugenbereich erfolgen.

Als wesentlicher Vorteil wird durch die direkte Verbindung der Formelemente miteinander eine gleichmäßige Verteilung der, auf ein Formelement oder wenige Formelemente des Formelementeverbundes, einwirkenden Kräfte innerhalb eines erfindungsgemäßen Verschleißschutzes gewährleistet.
Insbesondere punktuell auftretende Stoßbelastungen können so durch den Formelementeverbund besser aufgenommen und abgeleitet werden, als dies bei herkömmlichen Verschleißschutzvorrichtungen der Fall ist.

In einer weiteren bevorzugten Weiterbildung der Erfindung wird eine direkte Verbindung mindestens zweier Formelemente miteinander im Übergreifungs- und/ oder Fugenbereich durch ein aufgebrachtes Kleb- oder Haftmittel erzielt.

Je nach Anwendungsfall kann das Kleb- oder Haftmittel entweder vollflächig oder aber auch nur abschnittsweise auf den Übergreifungsbereich und/oder auf den Fugenbereich zweier, in einer Lagebeziehung zueinander stehenden, Formelemente aufgebracht werden.

Hierfür kommt ein, entsprechend dem Anforderungsprofil ge-wähltes Kleb- oder Haftmittel zum Einsatz, welches in der Lage ist, den mechanischen und thermischen Belastungen während der Verwendung eines erfindungsgemäßen Verschleißschutzes standzuhalten.

Um insbesondere die Anpassbarkeit des Verschleißschutzes an unebene Untergründe zu ermöglichen, weist das eingesetzte Kleb- oder Haftmittel vorzugsweise entsprechende Elastizitätseigenschaften auf.

In einer weiteren besonders vorteilhaften Variante der Erfindung wird die Verbindung der Formelemente miteinander durch Vulkanisieren eines Elastomermaterials im Übergreifungs- und/ oder Fugenbereich bewirkt.

Die Vulkanisation des Elastomermaterials zwischen die Formelemente ermöglicht in Abhängigkeit von dessen Elastizitätseigenschaften eine nochmals erhöhte Flexibilität des Formelementeverbundes, wodurch dieser auch auf extrem unebenen und/ oder sehr flexiblen Untergründen anwendbar ist.
Gleichzeitig ermöglicht die Elastizität und damit die Nachgiebigkeit des, zwischen die Formelemente vulkanisierten, Elastomermaterials dem Verschleißschutz besonders vorteilhaft, punktuell auftretenden Stoßbelastungen aufzunehmen und diese durch die elastische Nachgiebigkeit abzubauen.

Eine ebenso bevorzugte Weiterbildung des Verschleißschutzes sieht vor, dass durch das Verbundmittel eine indirekte Verbindung der Formelemente miteinander erfolgt.

Unter einer indirekten Verbindung wird im vorliegenden Fall verstanden, dass die jeweiligen Formelemente nicht miteinander in Verbindung stehen, sondern dass jedes der Formelemente für sich mit einer unterseitig angeordneten Trägerebene verbunden ist, so dass die Lagebeziehung der Formelemente zueinander mittelbar durch die Trägerebene festgelegt ist.

Die Trägerebene wird durch ein geeignetes Trägermaterial bereitgestellt. Auch der zu schützende Untergrund selbst kann die Trägerebene bilden.

Die indirekte Verbindung der Formelemente miteinander über die rückseitige Trägerebene, ermöglicht die Ausbildung definierter Abstände zwischen den jeweils miteinander verbundenen Ebenen der Formelemente.

Abhängig von der Wahl der Abstandsdimensionen zwischen den Formelementen, wird es diesen damit besonders vorteilhaft ermöglicht, eine beschränkte Relativbewegung zueinander auszuführen und somit eine, dem jeweiligen Verwendungszweck angepasste Flexibilität des erfindungsgemäßen Verschleißschutzes zu gewährleisten, ohne dass sich durchgehende Durchdringungen zwischen den Formelementen ausbilden, in welches abrasiv wirkendes Material eindringen könnte. In diesem Fall ist die Trägerebene elastisch und dabei vorzugsweise gleichzeitig hochzug- und scherfest ausgebildet.
Innerhalb eines erfindungsgemäßen Verschleißschutzes übernimmt die hochzug- und scherfeste Trägerebene die Funktion einer Bewehrung für den Formelementeverbund und verhindert ein Durchwandern einzelner Formelemente, beispielsweise bei lokalen Stoßbelastungen, durch die Trägerebene hindurch.

Die Trägerebene kann in besonders vorteilhafter Weise auch nachgebende und dämpfende Eigenschaften aufweisen.
Insbesondere bei lokal auftretenden Stoßbelastungen, bei-spielsweise durch, auf den Verschleißschutz aufprallende, Gesteinsbrocken, kann in einem solchen Fall die Stoßenergie durch die Nachgiebigkeit der Trägerschicht aufgenommen und durch Dämpfung wirkungsvoll abgebaut werden.
Um dies zu erreichen können der Trägerschicht darüber hinaus auch dämpfende Elemente wie Gel- oder Luftkissen zugeordnet sein, welche beispielsweise zwischen der zu schützenden Oberfläche und der Trägerschicht platziert oder in die Trägerschicht integriert werden.

Ferner kann die Trägerebene vorteilhaft durch flexible Stahlelemente, beispielsweise Stahldrähte gebildet werden, auf welche die Formelemente aufgefädelt werden.

Die Trägerebene kann je nach Anforderung aber gleichermaßen auch starr und/ oder unnachgiebig ausgebildet sein.

In einer besonders vorteilhaften Variante der Erfindung erfolgt die Verbindung der Formelemente miteinander durch deren Einlassen in ein Trägermaterial.

Das Trägermaterial besteht vorzugsweise aus einem Elastomerwerkstoff und ist ebenfalls so gewählt, dass dieses den auftretenden mechanischen und thermischen Belastungen während des Einsatzes eines erfindungsgemäßen Verschleißschutzes standhält.

Das Einlassen der Formelemente erfolgt vorzugsweise durch Vulkanisation des Trägermaterials um die Formelemente herum, wobei die erfindungsgemäße Übergreifung der einzelnen Formelemente stets beibehalten wird.

Gleichermaßen ist es erfindungsgemäß möglich, die Formelemente auf mechanische Art und Weise, beispielsweise durch Verschrauben, mit dem Trägermaterial zu verbinden.

Ein Verschleißschutz nach der vorliegenden Erfindung kann überaus vorteilhaft, in Abhängigkeit der Wahl des Verbundmittels, in unterschiedliche Raumrichtungen gekrümmt werden und ist dadurch auf den unterschiedlichsten, zu schützenden Untergründen anwendbar.

Punktuell auftretende Stoßbelastungen werden zum einen durch die Widerstandsfähigkeit der Formelemente selbst und zum anderen durch die elastische Nachgiebigkeit des gesamten Formelementeverbundes aufgenommen und abgebaut.

Sowohl die direkte, als auch die indirekte Verbindung der Formelemente miteinander, ermöglichen es darüber hinaus in besonders vorteilhafter Weise, dass ein Verschleißschutz im Sinne der vorliegenden Erfindung, entsprechend dem jeweiligen Verwendungszweck vorkonfektioniert werden kann und an dessen Einsatzort lediglich auf den zu schützenden Untergrund aufgelegt oder an diesem befestigt werden muss.
Aufwändige und zeitintensive Installationsarbeiten vor Ort werden somit wirkungsvoll vermieden.

Direkte und indirekte Verbindung ermöglichen es ebenso vorteilhaft, einen endlos langen und/oder endlos breiten, starren oder flexiblen Verbund aus Formelementen zur Verwendung als Verschleißschutz zu bilden.

Eine weitere bevorzugte Ausbildung des Verschleißschutzes sieht vor, dass die erfindungsgemäß vorgesehene Trägerebene durch einen zu schützenden Untergrund selbst gebildet wird.
Dies bietet insbesondere dann besondere Vorteile, wenn die einzelnen Formelemente kraft- und/oder formschlüssig auf den zu schützenden Untergrund oder das zu schützende Bauteil auf¬gebraucht werden.

Hierzu werden in einer weiteren vorteilhaften Weiterbildung einzelne oder aber auch alle Formelemente des Verschleiß-schutzes mit Ankern versehen, welche in dafür vorgesehene Öffnungen in dem Untergrund eingreifen.
Unter Ankern wird jede konvexe Abweichung von der ebenen Oberfläche der, einer zu schützenden Oberfläche zugewandten, Seite der Formelemente verstanden, welche das Verbinden des Formelements mit der Trägerebene ermöglicht.
Dabei kann die Verbindung zwischen Formelement und Untergrund je nach Anwendungsfall starr oder beweglich ausgeführt sein.

Eine ebenso bevorzugte Variante der Erfindung sieht vor, dass einzelne oder alle Formelemente des Verschleißschutzes Ausnehmungen aufweisen, in welche Befestigungsmittel wie beispielsweise Anker oder Schrauben eingreifen.
Auch hier kann das Formelement mit dem Untergrund oder einer anderen Trägerebene entweder beweglich oder auch starr verbunden sein.

In einer weiteren bevorzugten Ausbildung des Verschleißschutzes bestehen die Formelemente aus Keramikmaterial.
Hierunter fallen sämtliche bekannten Keramik- oder Keramik-verbundmaterialien, sowie keramische Faserverbundwerkstoffe.

Die Formelemente werden auf bekannte Art und Weise durch Sintern des verwendeten Keramikmaterials hergestellt und weisen eine hohe Abrieb- und Verschleißfestigkeit, eine sehr gute Korrosions-, sowie Hitzebeständigkeit auf. Die Hitzebeständigkeit, der geringe Wärmeleitungskoeffizient und der geringe Wärmeausdehnungskoeffizient ermöglichen es als besonderen Vorteil, den Verschleißschutz auch als thermischen Verschleißschutz einsetzbar zu machen. Darüber hinaus weisen erfindungsgemäße Formelemente aus Keramikmaterial vergleichsweise geringe Flächenmassen auf.

Weiterhin ist es auch denkbar, die erfindungsgemäß vorgesehenen Formelemente mit einem Keramik-Laminat auszubilden, durch welches die Widerstandsfähigkeit der Formelemente nochmals verbessert werden kann.

Die erfindungsgemäß vorgesehenen Formelemente des Verschleißschutzes sind in einer ebenso vorteilhaften Weiterbildung aus Hartmetallmaterial, insbesondere gesintertem Hartmetall gefertigt.
Hartmetallische Werkstoffe weisen ebenfalls eine hohe Härte und Abriebfestigkeit, sowie eine sehr gute Hitzebeständigkeit auf.

Über die dargestellten Ausführungsformen hinaus können die Formelemente des offenbarten Verschleißschutzes ebenfalls aus jeglichen anderen Werkstoffen gefertigt sein, insofern diese über die notwendige Verschleiß- und Hitzebeständigkeit verfü¬gen.

Eine bevorzugte Anwendung der Erfindung sieht fortführend vor, dass die Anordnung der Formelemente innerhalb eines erfindungsgemäßen Formelementeverbundes im Wesentlichen derart erfolgt, dass die miteinander verbundenen Ebenen der Formelemente in Strömrichtung des abrasiv wirkenden Mediums abfallende Höhenniveaus aufweisen. Die Ebenen liegen damit, in Strömrichtung betrachtet, in einer schuppenartigen Anordnung vor.

Hierdurch wird es als besonderer Vorteil verhindert, dass das abrasiv wirkende Medium bei dessen Bewegung über einen erfindungsgemäßen Verschleißschutz die Formelemente unterlaufen und so den Verschleißschutz schädigen kann.

In einer weiteren bevorzugten Weiterbildung des Verschleißschutzes sind die Formelemente in dem gebildeten Formelementeverbund in dessen Längsrichtung mauerwerksartig versetzt angeordnet.
Ein derart versetztes Anordnen der Formelemente führt als besonderer Vorteil dazu, dass jedes Formelement in Längsrichtung des Formelementeverbundes bereits in seiner ersten Ebene mit mindestens zwei weiteren Formelementen in einem Formschluss steht. Es wird somit auf besonders einfache Weise ein Unterwandern durch ein zu führendes Medium erschwert, die Verteilung von Belastungsspitzen auf mehrere Formelemente begünstigt und somit die Widerstandsfähigkeit verbessert.

In einer bevorzugten Weiterbildung sind die Ebenen der Formelemente symmetrisch, also in gleicher Dicke und gleicher Ausladung ausgebildet. Damit weist das gesamte Formelement einen mehrfach symmetrischen Aufbau auf, wodurch sich Vorteile in der Herstellung ergeben, weil weniger aufwändige Handhabungstechnik für eine lagegerechte Zuführung der Formelemente zur Montage benötigt wird.

Eine besondere Ausbildung der Erfindung sieht vor, dass die Formelemente jeweils drei zueinander versetzt angeordnete Ebenen aufweisen. Erfindungsgemäß ist der Versatz der Ebenen dabei so gewählt, dass sich die, dem Medium zugewandte Ebene und die, dem zu schützenden Untergrund zugewandte Ebene, nicht überdecken.

Die Ausbildung von Formelementen mit drei Ebenen hat den besonderen Vorteil, dass in dem Formelementeverbund keine Durchdringungen, weder linien-, noch punktförmig, vorliegen.

Somit wird die Möglichkeit eines direkten Durchtritts eines abrasiv wirkenden Mediums durch den Formelementeverbund be-sonders zuverlässig ausgeschlossen.

Die Erfindung wird als Ausführungsbeispiel an Hand von
- Fig. 1a: Seitliche Ansicht Formelement mit zwei Ebenen
- Fig. 1b: Draufsicht Formelement mit zwei Ebenen
- Fig. 2a: Seitliche Ansicht Formelementeverbund
- Fig. 2b: Draufsicht Formelementeverbund
- Fig. 3: Perspektiv- und Schnittansicht Formelementeverbund mit Trägerebene
- Fig. 4: Perspektivansicht Formelement mit Doppelanker
näher erläutert.

Ein Ausführungsbeispiel eines erfindungsgemäßen Verschleißschutzes weist eine Vielzahl Formelemente 1 auf.

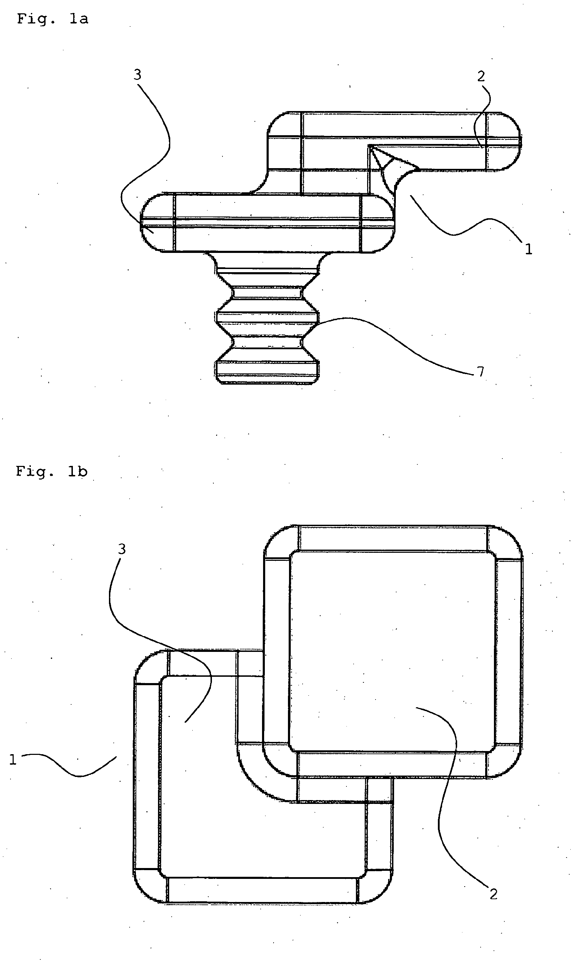

Fig. 1 a und 1 b zeigen ein solches Formelement 1 in einer detaillierten Darstellung.

Die Formelemente 1 sind erfindungsgemäß so ausgebildet, dass diese jeweils eine erste Platte 2 und eine zweite Platte 3 aufweisen.
Die Platten 2 und 3 sind sowohl horizontal, als auch vertikal zueinander versetzt innerhalb des jeweiligen Formelements 1 angeordnet sowie durch die stoffliche Verbindung in der Lage zueinander festgelegt.

Zusammengefasst lässt sich die Form eines Formelements 1 auch so beschreiben, dass zwei gleich große Platten planparallel und über deren Diagonale verschoben vorliegen, wobei beide Platten in ihrem Überschneidungsbereich stofflich ineinander übergehen.

Der zweiten Platte 3 ist weiterhin ein Anker 7 zugeordnet, welcher zur Verankerung des Formelements 1 in einer Träger-ebene dient.

Wie den Figuren 1 a und 1 b ebenfalls zu entnehmen ist, sind die Platten 2 und 3 innerhalb des Formelements 1 versetzt zueinander angeordnet, wobei der Bereich der übereinstimmte Flächenbereich der versetzten Anordnung nachfolgend auch als Überschneidungsbereich bezeichnet wird und wobei sich die Ebenen 2 und 3 eines Formelements 1 in dem Überschneidungsbereich überlappen und wie in Fig. 1 a und 1 b ebenfalls dargestellt stofflich miteinander verbunden sind.

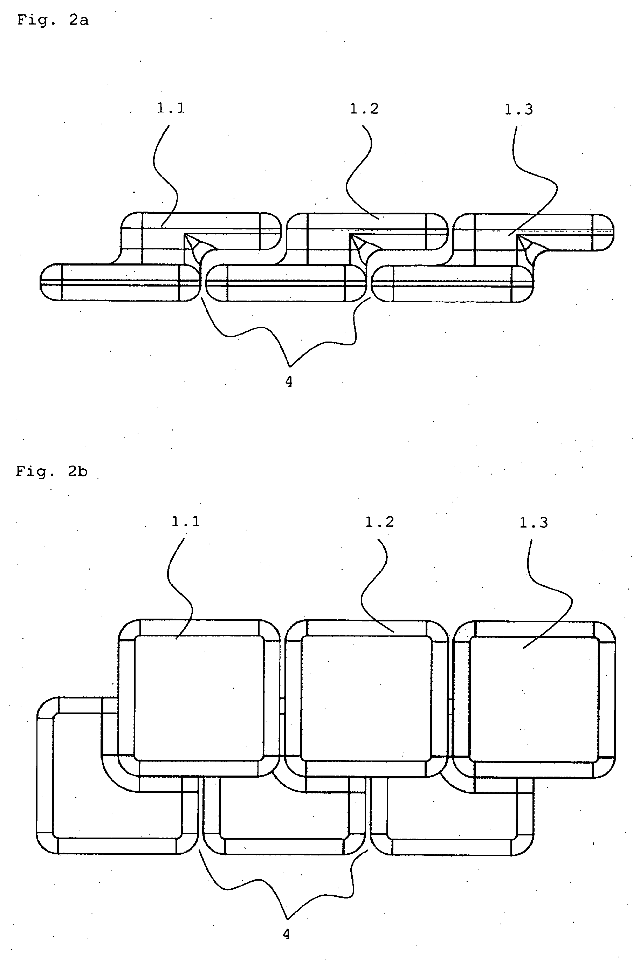

Die Figuren 2a und 2b zeigen einen erfindungsgemäßen Formelementeverbund, bestehend aus mindestens drei, jeweils in einer Lagebeziehung zueinander stehenden Formelementen 1.1, 1.2 und 1.3.
Zur Verbesserung der Übersichtlichkeit wird hier auf die Darstellung eines Verbundmittels, zum Festlegen der Lagebezie¬hung der Formelemente 1 zueinander, verzichtet.

Zwischen den Formelementen 1.1 und 1.2 und 1.2 und 1.3 bilden sich erfindungsgemäß Fugen 4 aus, welche im weiteren Verlauf gänzlich oder auch nur teilweise mit einem Elastomermaterial ausgefüllt werden können.

Durch die Ausbildung der Fugen 4 zwischen den jeweiligen Formelementen 1 wird besonders vorteilhaft eine Flexibilität des Formelementeverbundes bewirkt, wodurch dieser auch an sehr unebene oder flexible Objekte angepasst werden kann.

Wie die Fig. 2b in Kombination mit der Fig. 1b ebenfalls zeigt, sind die Platten 2 und 3 des jeweiligen Formelements 1.1 bis 1.3 vorliegend derart dimensioniert, dass der, sich zwischen jeweils zwei benachbarten Formelementen 1.1 bis 1.3 einstellende, Übergreifungsbereich größer ist als der jeweilige Überschneidungsbereich der Formelemente 1.1 bis 1.3.

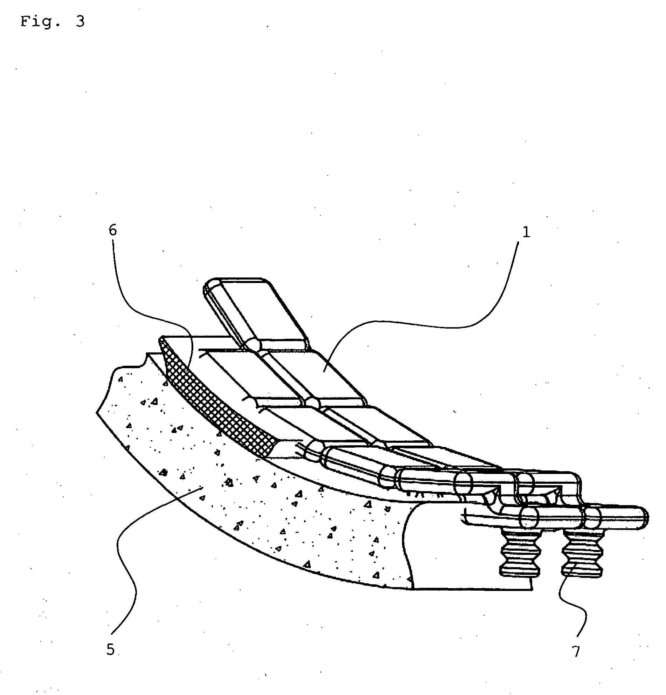

In Figur 3 wird ein Ausschnitt eines kompletten, erfindungsgemäßen Verschleißschutzes dargestellt.

Hierbei werden mehrere Formelemente 1 über deren Anker 7 mit einer Trägerebene 5 verbunden.
Die Verbindung zwischen Formelementen 1 und Trägerebene wird beispielsweise durch mechanisches Einbringen der Formelemente 1 oder durch Vulkanisieren erreicht.

Die Trägerebene 5 besteht besonders vorteilhaft aus einem elastischen und dabei hochzug- und scherfesten Material, welches innerhalb des Verschleißschutzes eine Bewehrungsfunktion für den Formelementeverbund übernimmt. Gleichzeitig wird durch die Elastizität der Trägerebene 5 die flexible Anpassbarkeit des Verschleißschutzes an unebene Untergründe, sowie dessen Verwendbarkeit auf flexiblen Objekten gewährleistet.

Der sich zwischen den Formelementen 1 ausbildende Fugenbereich wird im hier vorliegenden Fall mit einem Elastomermaterial 6 ausgefüllt, wobei das Elastomermaterial 6 in den Fugenbereich vulkanisiert wird.

Durch das Elastomermaterial 6 entsteht besonders vorteilhaft eine direkte, stoffschlüssige Verbindung der Formelemente un¬tereinander, welche dem Verschleißschutz zu ei¬ner nochmals erhöhten Widerstandsfähigkeit gegenüber Stoßbelastungen und Abrasivwirkungen verhilft.

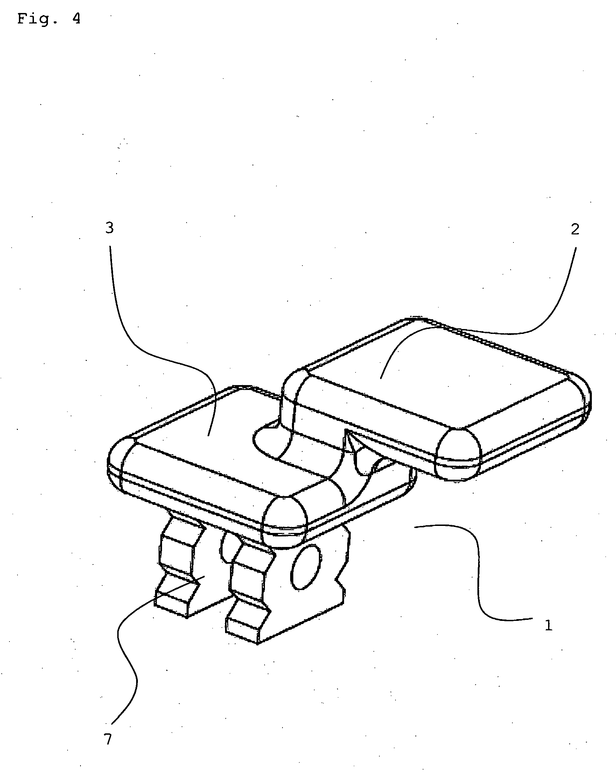

In Figur 4 wird eine besondere Ausführungsform eines Formelements 1 dargestellt.

Bei dieser Ausführungsform handelt es sich um ein Formelement 1 mit einem doppelt ausgeführten und gelochten Anker 7.
Ein derart ausgebildeter Anker 7 ermöglicht es besonders vorteilhaft, ein Formelement 1 über flexible Stahlelemente, insbesondere über Stahldrähte (nicht dargestellt), miteinander zu verbinden.
In einem solchen Fall würde die Trägerebene 5 durch die flexiblen Stahlelemente, beispielsweise als Drahtgitter, gebildet werden.
Ein aufwändiges Vulkanisieren einer Trägerebene, beziehungsweise ein aufwändiges Einbringen der Formelemente 1 in eine Trägerebene 5 wird somit vermieden.

### Verwendete Bezugszeichen

- 1: Formelement
- 1.1: erstes Formelement
- 1.2: zweites Formelement
- 1.3: drittes Formelement
- 2: erste Platte
- 3: zweite Platte
- 4: Fuge
- 5: Trägerebene
- 6: Elastomermaterial
- 7: Anker

## Patentansprüche

1. Verschleißschutz, aufweisend eine Mehrzahl plattenförmiger Formelemente (1),
wobei die Formelemente (1) jeweils mindestens zwei zueinander versetzt angeordnete gleich große Platten (2, 3) aufweisen, wobei die jeweils eine Diagonale aufweisenden Platten (2, 3) planparallel und über ihre Diagonale verschoben vorliegen und einen Überschneidungsbereich ausbilden, in welchem sie stofflich ineinander übergehen, und wobei mindestens zwei Formelemente (1.1) und (1.2) in einem Formelementeverbund derart in einer Lagebeziehung zueinander festgelegt sind, dass eine erste Platte (2) eines ersten Formelements (1.1) zweite Platten (3) weiterer Formelemente (1.2) in einem Übergreifungsbereich abschnittsweise übergreift, und wobei durch jede der mindestens zwei Platten (2) und (3) der Formelemente (1) in dem Formelementeverbund jeweils eine Gesamtfläche ausgebildet wird, **dadurch gekennzeichnet, dass** der Übergreifungsbereich etwa dreimal größer ist als der Überschneidungsbereich.

2. Verschleißschutz nach Anspruch 1,
**dadurch gekennzeichnet,**
**dass** die Lagebeziehung der Formelemente (1) zueinander durch ein Verbundmittel festgelegt ist.

3. Verschleißschutz nach Anspruch 1 und 2,
**dadurch gekennzeichnet,**
**dass** durch das Verbundmittel eine direkte Verbindung der Formelemente (1) miteinander erfolgt.

4. Verschleißschutz nach Anspruch 3,
**dadurch gekennzeichnet,**
**dass** die Verbindung der Formelemente (1) miteinander durch ein Kleb- oder Haftmittel erfolgt.

5. Verschleißschutz nach Anspruch 3,
**dadurch gekennzeichnet,**
**dass** die Verbindung der Formelemente (1) miteinander durch Vulkanisieren eines Elastomermaterials (6) erfolgt.

6. Verschleißschutz nach Anspruch 1 und 2,
**dadurch gekennzeichnet,**
**dass** durch das Verbundmittel eine indirekte Verbindung der Formelemente (1) über deren jeweilige direkte Verbindung mit einer unterseitigen Trägerebene (5) erfolgt.

7. Verschleißschutz nach Anspruch 6,
**dadurch gekennzeichnet,**
**dass** es sich bei der Trägerebene um ein elastisches Trägermaterial handelt, mit welchem die Formelemente durch deren Einlassen verbunden sind.

8. Verschleißschutz nach Anspruch 6,
**dadurch gekennzeichnet,**
**dass** die Trägerebene (5) durch einen zu schützenden Untergrund selbst gebildet wird.

9. Verschleißschutz nach Anspruch 6 bis 8,
**dadurch gekennzeichnet,**
**dass** die Formelemente (1) mit Ankern (7) versehen sind, welche in die Trägerebene (5) eingreifen.

10. Verschleißschutz nach Anspruch 6 bis 8,
**dadurch gekennzeichnet,**
**dass** die Formelemente (1) Ausnehmungen aufweisen, in welche, mit der Trägerebene (5) im Eingriff stehende, Befestigungsmittel eingreifen.

11. Verschleißschutz nach einem der vorhergehenden Ansprüche,
**dadurch gekennzeichnet,**
**dass** die Formelemente (1) aus Keramikmaterial bestehen.

12. Verschleißschutz nach einem der vorhergehenden Ansprüche,
**dadurch gekennzeichnet,**
**dass** die Formelemente (1) aus Hartmetallmaterial bestehen.

13. Verschleißschutz nach einem der vorhergehenden Ansprü-che, **dadurch gekennzeichnet,**
**dass** die Formelemente (1) in dem Formelementeverbund mauerwerksartig versetzt angeordnet sind.

14. Verschleißschutz nach einem der vorhergehenden Ansprüche,
**dadurch gekennzeichnet,**
**dass** die Platten (2) und (3) eines Formelements (1) symmetrisch ausgebildet sind.

## Claims

1. Wear protection device providing a plurality of plate-shaped elements (1), with each of the shaped elements (1) being provided with at least two plates of the same size arranged offset to one another (2, 3), and the plates, having one diagonal, are shifted plane-parallel via their diagonal and form a connection region in which they materially merge, and at least two shaped elements (1.1) and (1.2) are defined in a shaped-element combination in a positional relation to each other such that a first plate (2) of a first shaped element (1.1) partially overlaps second plates of further shaped elements (1.2) in an overlapping region, and a total region is formed by each of the at least two plates (2) and (3) of the shaped elements (1) in the shaped element composite, wherein the size of the overlapping region is approximately three times bigger than the size of the connection region.

2. Wear protection device according to claim 1,
wherein,
the positional relation of the shaped elements (1) to each other is determined by a compounding agent.

3. Wear protection device according to claim 1 and 2,
wherein,
the compounding agent directly connects the shaped elements (1) with each other.

4. Wear protection device according to claim 3,
wherein,
the shaped elements (1) are connected with each other by means of a bonding or adhesive agent.

5. Wear protection device according to claim 3,
wherein,
the connection of the shaped elements (1) with each other is achieved by the vulcanisation of an elastomer material (6).

6. Wear protection device according to claim 1 and 2,
wherein,
the compounding agent establishes an indirect connection of the shaped elements (1) via their respective direct connection to a supporting plane (5) positioned on their underside.

7. Wear protection device according to claim 6,
wherein,
the supporting plane is an elastic supporting material with which the shaped elements are connected by being embedded in it.

8. Wear protection device according to claim 6,
wherein,
the supporting plane (5) itself is formed by an underground to be protected.

9. Wear protection device according to claim 6 to 8,
wherein,
the shaped elements (1) are equipped with anchors (7) which engage with the supporting plane (5).

10. Wear protection device according to claim 6 to 8,
wherein,
the shaped elements (1) are provided with recesses with which fixing units engage which also engage with the supporting plane (5).

11. Wear protection device according to one of the preceding claims,
wherein,
the shaped elements (1) are made of ceramic material.

12. Wear protection device according to one of the preceding claims,
wherein,
the shaped elements (1) are made of hard metal material.

13. Wear protection device according to one of the preceding claims,
wherein,
the shaped elements (1) are arranged offset to each other in a brick-work pattern in the shaped element composite.

14. Wear protection device according to one of the preceding claims,
wherein,
the plates (2) and (3) of a shaped element (1) have a symmetric form.

## Revendications

1. Protection contre l'usure comprenant plusieurs éléments de moule en forme de plaque (1),
dont les éléments de moule (1) se composent respectivement d'au moins de deux plaques (2, 3) de la même taille étant disposées de manière décalée et les plaques (2, 3) ayant respectivement une diagonale sont décalées en plan parallèle et par leur diagonale et forment une zone de chevauchement, dans laquelle elles s'enchaînent physiquement, et dont au moins deux éléments de moule (1.1) et (1.2) dans un groupe des éléments de moule sont fixés l'un à l'autre par une relation de position de sorte qu'une première plaque (2) d'un premier élément de moule (1.1) recouvre par sections les deuxième plaques (3) d'autres éléments de moule (1.2) dans une zone de recouvrement et chaque d'au moins deux plaques (2) et (3) des éléments de moule (1) dans le groupe des éléments de moule respectivement forment une surface totale, est **caractérisé en ce que** la zone de recouvrement est environ trois fois supérieure à la zone de chevauchement.

2. Protection contre l'usure suivant la revendication 1
est **caractérisée en ce**
**que** la relation de position entre les éléments de moule (1) est déterminée par un moyen de jonction.

3. Protection contre l'usure suivant les revendications 1 et 2
est **caractérisée en ce**
**qu'**une liaison directe entre les éléments de moule (1) est réalisée à l'aide du moyen de jonction.

4. Protection contre l'usure suivant la revendication 3
est **caractérisée en ce que**
la liaison entre les éléments de moule (1) est réalisée à l'aide d'un moyen collant ou adhérent.

5. Protection contre l'usure suivant la revendication 3
est **caractérisée en ce**
**que** la liaison entre les éléments de moule (1) est réalisée en vulcanisant un matériau élastomère (6).

6. Protection contre l'usure suivant les revendications 1 et 2
est **caractérisée en ce**
**que** - grâce au moyen de jonction - une liaison indirecte entre les éléments de moule (1) est réalisée par leur liaison direct respective avec un plan de support sur sa face inférieure (5).

7. Protection contre l'usure suivant la revendication 6
est **caractérisée en ce**
**que** le plan de support est un matériau support élastique avec lequel les éléments de moule sont connectés par leur introduction.

8. Protection contre l'usure suivant la revendication 6
est **caractérisée en ce**
**que** le plan de support (5) est un fond à protéger.

9. Protection contre l'usure suivant les revendications 6 à 8
est **caractérisée en ce**
**que** les éléments de moule (1) sont munis des ancrages (7) qui s'engagent dans le plan de support (5).

10. Protection contre l'usure suivant les revendications 6 à 8
est **caractérisée en ce**
**que** les éléments de moule (1) sont munis des évidements pour l'introduction des moyens de fixation qui sont engagés dans le plan de support (5).

11. Protection contre l'usure suivant une des revendications précédentes
est **caractérisée en ce**
**que** les éléments de moule (1) se composent d'un matériau céramique.

12. Protection contre l'usure suivant une des revendications précédentes
est **caractérisée en ce**
**que** les éléments de moule (1) se composent d'un matériau en métaux durs.

13. Protection contre l'usure suivant une des revendications précédentes
est **caractérisée en ce**
**que** les éléments de moule (1) sont décalés l'un par rapport à l'autre dans le groupe des éléments de moule sous forme de maçonnerie.

14. Protection contre l'usure suivant une des revendications précédentes
est **caractérisée en ce**
**que** les plaques (2) et (3) d'un élément de moule (1) sont symmetrique.
